# EUROPEAN PATENT APPLICATION

(11) **EP 4 131 609 A1**
(43) Date of publication of application: **08.02.2023**
(21) Application number: 21919935.3
(22) Date of filing: 24.12.2021
(51) Int. Cl.: H01M 50/24, H01M 50/262, H01M 50/227, H01M 10/48, H01M 50/211

(54) **BATTERY MODULE AND BATTERY PACK COMPRISING SAME**

(30) Priority: 14.01.2021 KR 20210005509
(71) Applicant: LG Energy Solution, Ltd., Seoul 07335 (KR)
(72) Inventor: KIM, Tae Wook, Daejeon 34122 (KR); CHOI, Il Hoon, Daejeon 34122 (KR)
(74) Representative: Goddar, Heinz J.
(86) International application number: PCT/KR2021/019809
(87) International publication number: WO 2022/154311

(57) **Abstract**

A battery module according to an embodiment of the present disclosure includes a battery cell stack formed by stacking a plurality of battery cells, a module frame for housing the battery cell stack, and an insulating sheet layer located between the battery cell stack and the upper surface of the module frame, wherein an opening is formed in the upper surface of the module frame, and a protrusion inserted into the opening is formed in the insulating sheet layer.

## Description

### [TECHNICAL FIELD]

### Cross Citation with Related Application(s)

This application claims the benefit of Korean Patent Application No. 10-2021-0005509 filed on January 14, 2021 with the Korean Intellectual Property Office, the disclosure of which is incorporated herein by reference in its entirety.

The present disclosure relates to a battery module and a battery pack including the same, and more particularly, to a battery module having improved processability, and a battery pack including the same.

### [BACKGROUND]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series or in parallel.

Meanwhile, when a plurality of battery cells are connected in series or in parallel to configure a battery pack, a method of configuring a battery module composed of a plurality of battery cells and then adding other components to at least one battery module to configure a battery pack is common.

The battery module may include a battery cell stack in which a plurality of battery cells are stacked, and a module frame for housing the battery cell stack.

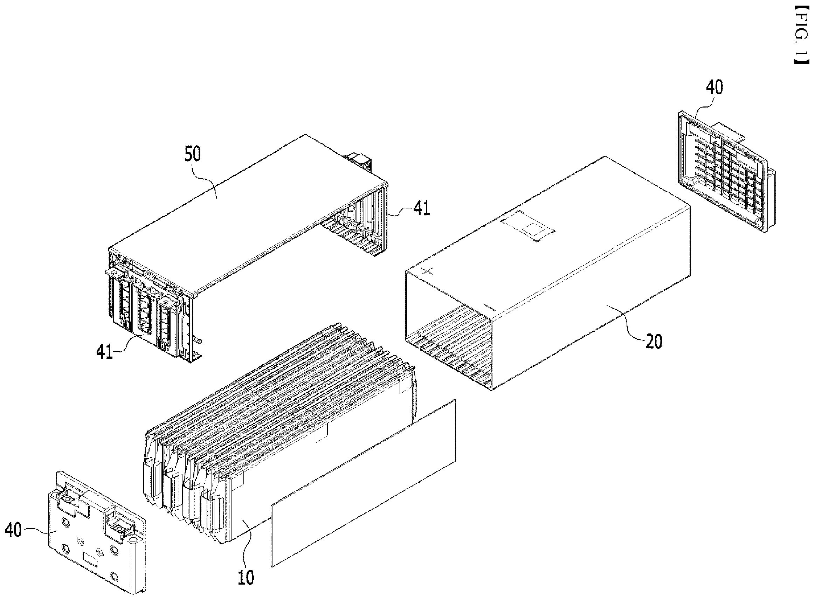

Fig. 1 is an exploded perspective view showing a conventional battery module.

Referring to Fig. 1, the conventional battery module may include a battery cell stack 10 formed by stacking a plurality of battery cells, a mono frame 20 that houses the battery cell stack 10, and end plates 40 that cover the front and rear surfaces of the battery cell stack.

Also, busbar frames 41 may be located between the battery cell stack 10 and the end plate 40, and a cover plate 50 may be located between the upper part of the battery cell stack 10 and the mono frame 20. The busbar frame 41 and the cover plate 50 can be coupled to each other to form a busbar frame assembly.

In the case of a conventional battery module, the cover plate 50 was attempted to secure the insulation between the battery cell stack 10 and the mono frame 20, and to prevent damage to the battery cell stack 10 and a flexible circuit board (not shown), and the like located on the battery cell stack 10 that may occur when received in the mono frame 20.

However, as shown in Fig. 1, there is a problem that due to the cover plate 50 arranged on the battery cell stack 10, the height of the battery module increases by the thickness thereof, and the weight increases.

When the size of the battery module increases in this manner, more installation space is required for installing the battery module, and when such a battery module is installed in a vehicle, there is a problem that the running performance of the vehicle is deteriorated.

In addition, when the weight of the battery module increases, the utilization of the battery module decreases as a whole, and similarly, when installing a heavy battery module in a vehicle, there is a problem that the running performance of the vehicle is deteriorated and the fuel efficiency is reduced.

### [DETAILED DESCRIPTION OF THE INVENTION]

### [Technical Problem]

It is an object of the present disclosure to provide a battery module having improved processability, and a battery pack including the same.

However, the problem to be solved by embodiments of the present disclosure is not limited to the above-mentioned problems, and can be variously expanded within the scope of the technical idea included in the present disclosure.

### [Technical Solution]

According to one aspect of the present disclosure, there is provided a battery module comprising: a battery cell stack formed by stacking a plurality of battery cells, a module frame for housing the battery cell stack, and an insulating sheet layer located between the battery cell stack and the upper surface of the module frame, wherein an opening is formed in the upper surface of the module frame, and a protrusion inserted into the opening is formed in the insulating sheet layer.

The module frame may include a frame member to which the battery cell stack is mounted, and an upper plate that is located on the opposite side of the bottom part of the frame member, and has an opening formed therein.

The frame member may include the bottom part, and side surface parts respectively extending upward from both sides of the bottom part.

The battery module may further include a temperature sensor that is located between the lower end of the insulating sheet layer portion on which the protrusion is formed and the battery cell stack.

A recessed part is formed inside the protrusion of the insulating sheet layer, and a part of the temperature sensor is arranged in the recessed part.

A protrusion of the insulating sheet layer is exposed to the outside of the module frame by the opening.

The battery module further includes end plates located on each of the opened first side and the opened second side of the module frame, and the opening may be formed adjacent to the end plate than the central part of the battery cell stack.

The insulating sheet layer may include a polycarbonate (PC) film.

The insulating sheet layer may be adhered to the upper surface of the module frame.

According to another aspect of the present disclosure, there is provided a battery pack comprising the above-mentioned battery module.

### [ADVANTAGEOUS EFFECTS]

According to embodiments of the present disclosure, the insulation performance between the plurality of battery cells and the module frame can be secured through the insulating sheet layer located on the battery cell stack.

In addition, in order to avoid interference between parts, an opening can be formed in the upper plate of the module frame, and an insulating sheet layer can be formed along the opening, thereby securing a space for the temperature sensor that measures the temperature of the battery cell.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

Fig. 1 is an exploded perspective view showing a conventional battery module;
Fig. 2 is an exploded perspective view of a battery module according to an embodiment of the present disclosure;
Fig. 3 is a perspective view showing a state in which components constituting the end plate included in the battery module of Fig. 2 are combined;
Fig. 4 is a perspective view showing a battery cell according to an embodiment of the present disclosure;
Fig. 5 is a perspective view of the battery module of Fig. 3 as viewed in a state of being rotated 180 degrees;
Fig. 6 is a perspective view showing an upper plate and an insulating sheet layer included in the battery module of Fig. 5; and
Fig. 7 is a cross-sectional view taken along the cutting line A-A of Fig. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

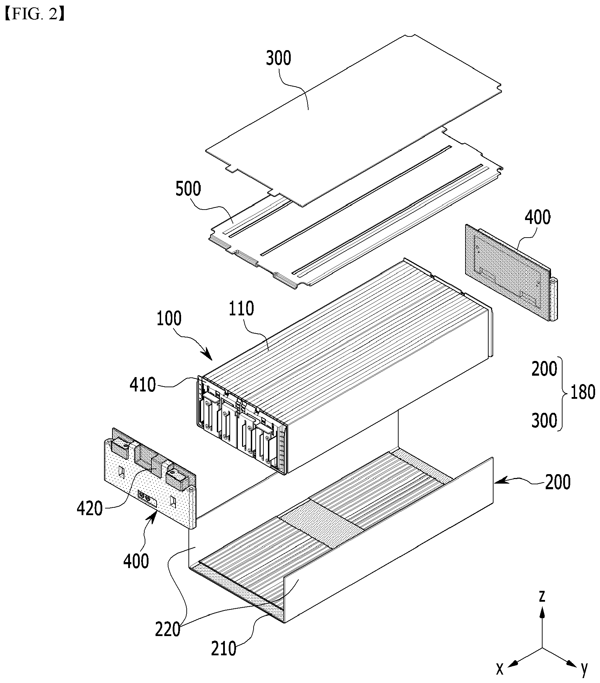

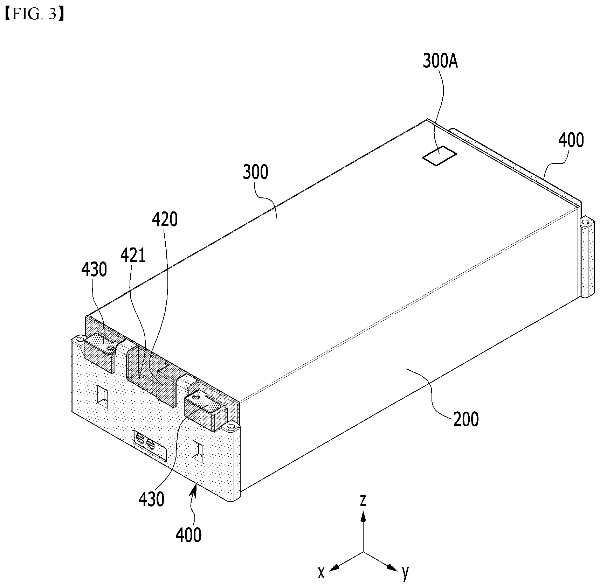

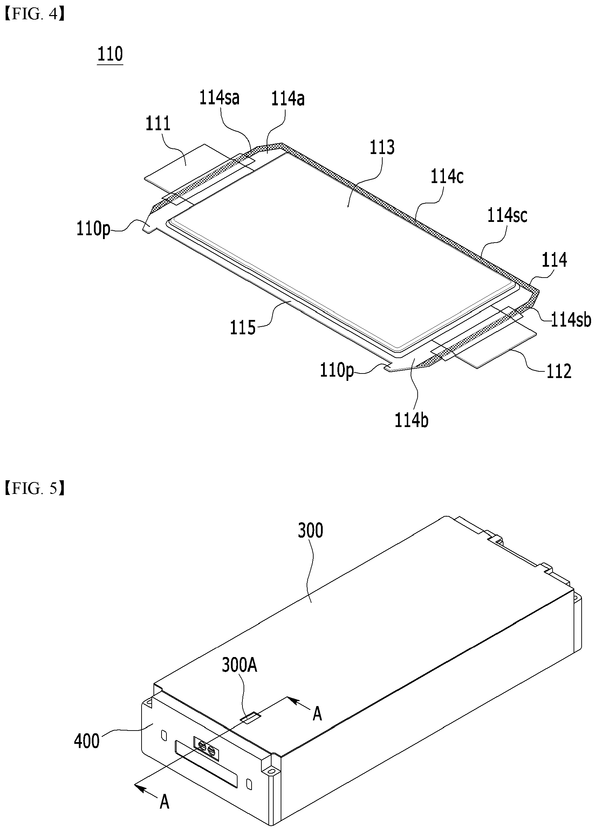

Fig. 2 is an exploded perspective view of a battery module according to an embodiment of the present disclosure. Fig. 3 is a perspective view showing a state in which components constituting the end plate included in the battery module of Fig. 2 are combined. Fig. 4 is a perspective view showing a battery cell according to an embodiment of the present disclosure.

Referring to Figs. 2 to 4, a battery module according to an embodiment of the present disclosure includes a battery cell stack 100 in which a plurality of battery cells 110 are stacked, a module frame 180 for housing the battery cell stack 100, end plates 400 located on the front and rear surfaces of the battery cell stack 100, respectively, and a busbar frame 410 located between the battery cell stack 100 and the end plate 400. According to the present embodiment, an insulating sheet layer 500 is formed between the battery cell stack 100 and the upper surface of the module frame 180.

The module frame 180 according to the present embodiment may include a frame member 200 with an opened upper side, and an upper plate 300 for covering the opened upper side of the frame member 200.

Here, the upper side of the frame member 200 means the z-axis direction in Fig. 2. The frame member 200 may include a bottom part 210 and at least two side surface parts 220 bent at both ends of the bottom part 210. At this time, the frame member 200 may be U-shaped.

The battery cell 110 is preferably a pouch-type battery cell. For example, referring to Fig. 4, the battery cell 110 according to an embodiment of the present disclosure has a structure in which the two electrode leads 111 and 112 face each other and protrude from one end a114a and the other end 114b of the battery body part 113. The battery cell 110 can be manufactured by joining both ends 114a and 114b of a cell case 114 and one side part 114c connecting them in a state in which an electrode assembly (not shown) is housed in a cell case 114. In other words, the battery cells 110 according to the present embodiment have a total of three sealing parts 114sa, 114sb and 114sc, the sealing parts 114sa, 114sb and 114sc have a structure that is sealed by a method such as heat-sealing, and the remaining other one side part can be composed of a connection part 115. Between both end parts 114a and 114b of the battery case 114 can be defined as the longitudinal direction of the battery cell 110, and between one side part 114c connecting both end parts 114a and 114b of the battery case 114 and the connection part 115 can be defined as the width direction of the battery cell 110.

The connection part 115 is a region extending long along one edge of the battery cell 110, and a protrusion 110p of the battery cell 110 called a bat-ear can be formed at an end of the connection part 115. The protrusion 110p may be formed on at least one of both ends of the connection part 115 and may protrude in a direction perpendicular to the extending direction of the connection part 115. The protrusion 110p may be located between one of the sealing parts 114sa and 114sb of both ends 114a and 114b of the battery case 114 and the connection part 115.

The battery case 114 generally has a laminate structure of a resin layer/a metal thin film layer/a resin layer. For example, when the surface of the battery case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, a battery cell stack 100 can be formed by attaching an adhesive member such as a cohesive-type adhesive such as a double-sided tape or a chemical adhesive bonded by chemical reaction during adhesion to the surface of the battery case.

According to embodiments of the present disclosure, the battery cells 110 can be stacked along the y-axis direction to form a battery cell stack 110, and the battery cell stack 100 may be housed in the module frame 180 in a direction opposite to the z-axis. A thermal conductive resin layer may be located between the battery cell stack 100 and the bottom part 210 of the frame member 200.

The frame member 200 houses the battery cell stack 100. When the opened both sides of the frame member 200 are referred to as a first side (x-axis direction) and a second side (direction opposite to the x-axis), respectively, the module frame 180 may be formed in a plate-shaped structure that is bent so as to continuously cover a lower surface and both side surfaces adjacent to the lower surface among the remaining outer surfaces excluding the outer surface of the battery cell stack 100 corresponding to the first side and the second side. At this time, the bottom part 210 of the frame member 200 is formed so as to cover the lower surface of the battery cell stack 100, and the two side surface parts 220 of the frame member 200 may be formed so as to cover the both side surfaces of the battery cell stack 100.

The upper plate 300 may be formed in a single plate-shaped structure that warps the lower surface wrapped by the frame member 200 and the remaining upper surfaces excluding the both side surfaces. The frame member 200 and the upper plate 300 can be coupled by welding or the like in a state in which the corresponding corner parts are in contact with each other, thereby forming a structure that covers the battery cell stack 100 vertically and horizontally. The battery cell stack 100 can be physically protected through the frame member 200 and the upper plate 300. For this purpose, the frame member 200 and the upper plate 300 may include a metal material having a predetermined strength.

The end plate 400 may be located on the opened first side (x-axis direction) and the opened second side (direction opposite to the x-axis) of the module frame 180, so that it can be formed so as to cover the battery cell stack 100. The end plate 400 can physically protect the battery cell stack 100 and other electrical components from external impacts, and a battery module mounting structure can be provided to fix the battery module to a pack frame (not shown).

Further, a busbar frame 410 and a separation cover 420 may be located on the opened first side (x-axis direction) and the opened second side (direction opposite to the x-axis) of the battery cell stack 100. That is, the busbar frame 410 and the separation cover 420 may be sequentially located between the battery cell stack 100 and the end plate 400.

The busbar frame 410 is located on the first side (x-axis direction) and the second side (direction opposite to the x-axis) of the battery cell stack 100, so that it can sever to cover the battery cell stack 100 and at the same time, to guide the connection between the battery cell stack 100 and an external device. Specifically, a busbar can be mounted onto the busbar frame 410, and the electrode leads 111 and 112 of the battery cells 110 shown in Fig. 4 pass through a slit formed in the busbar frame 410 and then can bent and joined to the busbar. Thereby, the battery cells 110 constituting the battery cell stack 100 can be connected in series or in parallel.

Further, the terminal busbar 430 can be mounted onto the busbar frame 410. The terminal busbar 430 is connected to at least one of the electrode leads 111 and 112 of the battery cell 110, and one end may be exposed to the outside through openings respectively formed in the separation cover 420 and the end plate 400. The plurality of battery cells 110 can be electrically connected to an external device via the terminal busbar 430. Further, a connector (not shown) may be mounted onto the busbar frame 410. Information such as temperature or voltage of the battery cell 110 measured through a sensing assembly (not shown) inside the battery module may be transmitted to an external BMS (battery management system) or the like via the connector.

The separation cover 420 is an electrically insulating member, and separates the battery cell stack 100, the busbar frame 410, other electrical equipment and the like from the end plate 400 or the upper plate 300, and thus can perform a function of preventing an external short circuit or the like from occurring. Meanwhile, the separation cover 420 may be formed with a recessed part 421 that is recessed so as to guide the connection between the connector and the external BMS.

The insulating sheet layer 500 according to the present embodiment is a thin film having an electrically insulating performance, and may include a polycarbonate (PC) film. The thickness of the insulating sheet layer 500 can be formed as thin as 0.1 mm to 0.3 mm. Therefore, even when the insulating sheet layer 500 is inserted into the battery module, there is an advantage that the height increase of the battery module is not large.

Further, the insulating sheet layer 500 including a polycarbonate (PC) film has heat resistance, and thus the degree of change in its shape is not large even when exposed to a high temperature environment for a long time. Therefore, the product management is easy, and it is suitable to be applied as a component of a battery module that generates heat.

In the present embodiment, the insulating sheet layer 500 is arranged on the battery cell stack 100, so that the battery cell stack 100 and the upper plate 300 can be insulated from each other. That is, the insulation performance of the battery module can be secured. In the conventional battery module shown in Fig. 1, a busbar frame assembly including a cover plate 50 is inserted to ensure insulation performance, which serves as a drawback in terms of space utilization and weight. Unlike the same, the insulating sheet layer 500 according to the present embodiment is a thin film, and can reduce both the height and weight of the battery module while securing the insulation performance of the battery module.

On the other hand, in a comparative example, an insulator in the form of a pad may be located on the battery cell stack. This comparative example is heavier and requires more space than the insulating sheet layer 500 according to the present embodiment. Further, since the insulating sheet layer 500 according to the present embodiment can be molded into a desired shape, a pad-shaped insulator can cover up to a portion where the insulation distance cannot be secured, thereby increasing the insulation performance.

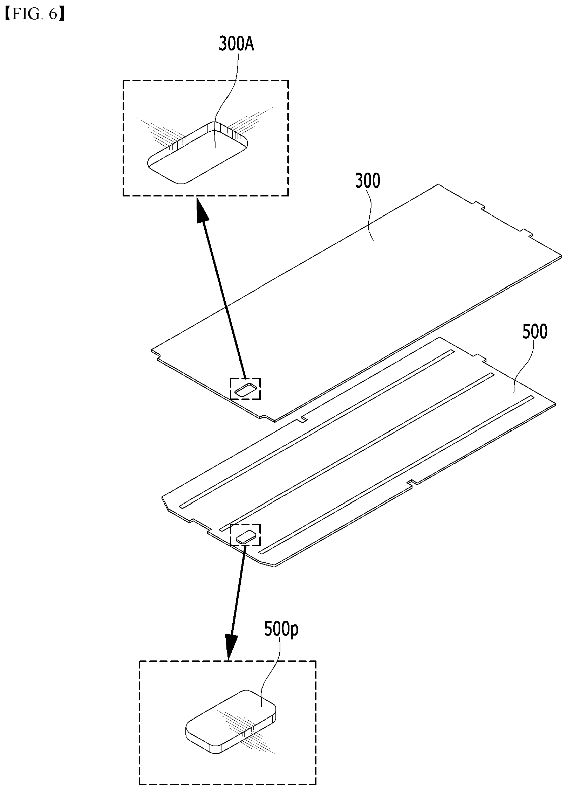

Fig. 5 is a perspective view of the battery module of Fig. 3 as viewed in a state of being rotated 180 degrees. Fig. 6 is a perspective view showing an upper plate and an insulating sheet layer included in the battery module of Fig. 5.

Referring to Figs. 5 and 6, an opening 300A is formed in the upper surface of the module frame 180 according to the present embodiment. Specifically, an opening 300A is formed in the upper plate 300, and a protrusion 500p inserted into the opening 300A is formed in the insulating sheet layer 500. The protrusion 500p may be exposed to the outside of the module frame 180 by the opening 300A.

The opening 300A may be formed adjacent to the end plate 400 rather than the central part of the battery cell stack 100.

The insulating sheet layer 500 according to the present embodiment can be adhered to the upper plate 300. More specifically, an adhesive member (not shown) may be located between the insulating sheet layer 500 and the upper plate 300. Such an adhesive member is not limited in terms of the material or shape as long as it contains a material having an adhesive force, but it may be a double-sided tape.

In the manufacture of the battery module, the insulating sheet layer 500 may be delivered in a state of being adhered to the upper plate 300. As described above, the insulating sheet layer 500 may be formed of a thin film, and can be easily adhered to the upper plate 300.

A battery module can be manufactured by arranging and assembling the insulating sheet layer 500 on the battery cell laminate 100 in a state of being adhered to the upper plate 300. That is, since the insulating sheet layer 500 is delivered in a state of being adhered to the upper plate 300, it is possible to prevent defects in the manufacturing process in which the insulating sheet layer 500 is displaced or detached in the process of assembling the upper plate 300.

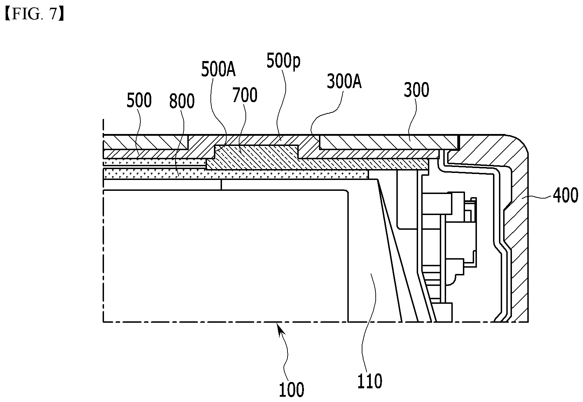

Fig. 7 is a cross-sectional view taken along the cutting line A-A of Fig. 5.

Referring to Figs. 5 to 7, the battery module according to the present embodiment further includes a temperature sensor 700 that is located between the lower end of the insulating sheet layer 500 on which the protrusion 500p is formed and the battery cell stack 100. The temperature sensor 700 can measure the temperature of the battery cell 110. The temperature sensor 700 may be formed on the flexible circuit board part 800.

The temperature sensor 700 may be implemented using a thermistor device. Thermistor is a semiconductor device that uses the phenomenon that the resistance value changes according to the temperature, and can be formed by mixing and sintering oxides of copper, manganese, nickel, cobalt, chromium, iron, and the like. Such a thermistor has an advantage of being small in size and capable of measuring even a rapid temperature change or a minute temperature change.

The temperature information measured by the temperature sensor 700 in this manner may be transmitted to another device outside the battery module. For example, when a temperature is measured by the temperature sensor 700, the measured temperature information may be transmitted to a battery management system (BMS) outside the battery module and used to control the battery module.

A recessed part 500A may be formed inside the protrusion 500p of the insulating sheet layer 500, and a part of the temperature sensor 700 may be arranged in the recessed part 500A. According to the present embodiment, the opening 300A may be formed at the time of trimming the material of the upper plate 300, without requiring a separate machining process to secure a space for the temperature sensor 700. In addition, by reflecting the shape of the insulating sheet layer 500 in the portion corresponding to the opening 300A, the space of the temperature sensor 700 component can be secured, thereby improving the processability.

The above-mentioned battery module can be included in the battery pack. The battery pack may have a structure in which one or more of the battery modules according to the embodiment of the present disclosure are gathered, and packed together with a battery management system (BMS) and a cooling device that control and manage battery's temperature, voltage, etc.

The above-mentioned battery module and the battery pack including the same can be applied to various devices. Such a device may be applied to a vehicle means such as an electric bicycle, an electric vehicle, or a hybrid vehicle, but the present disclosure is not limited thereto, and is applicable to various devices that can use a battery module, which also falls under the scope of the present disclosure.

Although the invention has been shown and described with reference to the preferred embodiments, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

100: battery cell stack
180: module frame
200: frame member
300: upper plate
300A: opening
400: end plate
500: insulating sheet layer
500A: recessed part
500P: protrusion
700: temperature sensor

## Claims

1. A battery module comprising:
a battery cell stack formed by stacking a plurality of battery cells,
a module frame for housing the battery cell stack, and
an insulating sheet layer located between the battery cell stack and the upper surface of the module frame,
wherein an opening is formed in the upper surface of the module frame, and a protrusion inserted into the opening is formed in the insulating sheet layer.

2. The battery module of claim 1, wherein:
the module frame comprises a frame member to which the battery cell stack is mounted, and an upper plate that is located on the opposite side of the bottom part of the frame member, and has an opening formed therein.

3. The battery module of claim 2, wherein:
the frame member comprises the bottom part, and side surface parts respectively extending upward from both sides of the bottom part.

4. The battery module of claim 1,
which further comprises a temperature sensor that is located between the lower end of the insulating sheet layer portion on which the protrusion is formed and the battery cell stack.

5. The battery module of claim 4, wherein:
a recessed part is formed inside the protrusion of the insulating sheet layer, and a part of the temperature sensor is arranged in the recessed part.

6. The battery module of claim 1, wherein:
a protrusion of the insulating sheet layer is exposed to the outside of the module frame by the opening.

7. The battery module of claim 1, wherein:
the battery module further comprises end plates located on each of the opened first side and the opened second side of the module frame, and
the opening is formed adjacent to the end plate than the central part of the battery cell stack.

8. The battery module of claim 1, wherein:
the insulating sheet layer comprises a polycarbonate (PC) film.

9. The battery module of claim 1, wherein:
the insulating sheet layer is adhered to the upper surface of the module frame.

10. A battery pack comprising the battery module of claim 1.
